# EUROPEAN PATENT APPLICATION

(11) **EP 4 369 633 A1**
(43) Date of publication of application: **15.05.2024**
(21) Application number: 23209210.6
(22) Date of filing: 10.11.2023
(51) Int. Cl.: H04B 7/185, H04W 36/00

(54) **HANDOVER OF SATELLITE TERMINAL USING ACCESS GATEWAY FUNCTION (AGF)**

(30) Priority: 10.11.2022 US 202263424275 P
(71) Applicant: Intelsat US LLC, McLean, VA 22102-5872 (US)
(72) Inventor: HASSAN, Lance C., McLean, 22102 (US); SAYE, Robert C., McLean, 22102 (US)
(74) Representative: Regimbeau

(57) **Abstract**

Handover is provided between a moving satellite terminal communicating via satellite with a destination node in a terrestrial network. Internet connectivity is provided between the satellite terminal and the destination node via an access gateway function (AGF). Embodiments provide transfer of an active PDU session such as voice or streaming over the internet protocol (IP) between a source AGF and a target AGF. Embodiments enable an AGF to understand when it needs to handover, where it needs to handover to and the protocol messages to achieve the handover.

## Description

### CROSS REFERENCE TO RELATED APPLICATION

This application claims benefit of priority to U.S. Provisional Patent Application 63/424,275 filed November 10, 2022, the content of which is incorporated by reference herein.

### FIELD

The present disclosure is related to maintaining a network connection of a satellite terminal during a network topology change.

### BACKGROUND

An Access Gateway Function (AGF) resides between wireline access infrastructure, such as Internet service providers (ISPs) and wireless core network, such as a 5G core. An AGF acts as a control plane and user plane access gateway. An AGF is a network function which may reside in the cloud.

The AGF was designed for fixed networks in terms of terms of the wireline access side. A typical deployment is a cable or fiber network into a residence or business. The AGF provides a gateway for the non-3GPP access devices (for example, a cable modem) to attach to a 5G core. A related application, hereby incorporated by reference, "PROCESS AND SYSTEM FOR MIGRATING SATELLITE NETWORKS TO 3GPP 5G ARCHITECTURE" having US Application No. 17/902,564 filed September 2, 2022 ("Network Migration Application"), explains how to use an AGF to obtain an IP address for a satellite terminal.

There are tens of thousands of satellite terminals which do not support cellular standards. These tens of thousands of satellite terminals can be brought onto the core of a cellular network using the Network Migration Application by way of an AGF. When a legacy satellite terminal moves from one geographic location to another, the connection via the AGF may be lost and a user session of streaming or voice may be interrupted. In some scenarios re-registration and re-authentication will be required.

### SUMMARY

The present application solves the problem of the legacy satellite terminal which is moving.

A difference between satellite and residential or business networks is that satellite terminals can be mobile. The AGF was designed for fixed networks. A way to transfer an active session between AGFs does not exist, and a transfer method is needed.

The Network Migration Application provides a process for using the AGF to facilitate non-3GPP satellite terminals onto a 5G core. The Network Migration Application is not directed to handover. The AGF lacks the ability to keep a mobile session active since there isn't a way to handover a session between AGFs when a satellite terminal is moving. Many satellite terminals are located on maritime and aero vessels and regularly travel between beams of the same satellite (satellite beam handover) or onto new satellites (inter-satellite handover). Sometimes this movement means the satellite connection will move between gateways. AGFs are standalone network functions that reside at individual gateways.

Embodiments provided herein enable an AGF to understand when it needs to handover, and where it needs to handover to. Embodiments also define a new interface for inter-AGF communications. Embodiments provide the protocols for a source AGF and a target AGF to use for their messaging.

Provided herein is a method of maintaining Internet connectivity between a satellite terminal and a destination node, the method including: determining, at the satellite terminal, that the handover is required because radio coverage will become unavailable from a first satellite; sending, by the satellite terminal, a message asking that a source AGF send a packet data unit (PDU) session identifier to a target AGF; receiving, by the target AGF from the source AGF, the PDU session identifier; and exchanging, by the satellite terminal via the target satellite, a plurality of IP datagrams with the destination node using an Internet Protocol address, wherein the flow of the plurality of IP datagrams is supported by the target AGF using the PDU session identifier.

In some embodiments, the method includes sending, by the satellite terminal, a DHCP Discover request to a target teleport; and receiving, at the satellite terminal, a second IP address from a target session management function (SMF).

In some embodiments, the exchanging is via the second IP address.

In some embodiments, the satellite terminal uses ephemeris data and a global map of satellite beam boundaries in the determining.

In some embodiments, the the target AGF receives the PDU session identifier over an Xi interface.

In some embodiments, the the DHCP Discover message includes a MAC address of the satellite terminal.

In some embodiments, the method includes sending, by an access and mobility function (AMF) an HTTP message to the SMF requesting the second IP address, wherein the HTTP message is a POST SmContext Modify request.

In some embodiments, the method includes sending, by the AMF to the target AGF, an HTTP message indicating success or failure for transfer of each PDU session identified in the POST SmContext Modify.

In some embodiments, the method includes, by the AMF, clearing the source AMF context and attaching the target AMF context to the satellite context.

Also provided is a system for maintaining Internet connectivity between a satellite terminal and a destination node, the system including: a satellite terminal; a source AGF; a target AGF; an AMF; and a DN, wherein the satellite terminal is configured to: determine that the handover is required because radio coverage will become unavailable from a source satellite; send a DHCP Discover request to a target teleport; receive a second Internet Protocol (IP) address from a target SMF; send a message asking that the source AGF send a PDU session identifier to the target AGF, wherein the target AGF is configured to receive, from the source AGF, the PDU session identifier and wherein the satellite terminal is further configured to exchange, via the target satellite, a plurality of IP datagrams with the destination node using the second IP address, wherein the flow of the IP datagrams is supported by the target AGF using the PDU session identifier.

### BRIEF DESCRIPTION OF THE DRAWINGS

The text and figures are provided solely as examples to aid the reader in understanding the invention. They are not intended and are not to be construed as limiting the scope of this invention in any manner. Although certain embodiments and examples have been provided, it will be apparent to those skilled in the art based on the disclosures herein that changes in the embodiments and examples shown may be made without departing from the scope of embodiments provided herein.
FIG. 1 illustrates communication sessions carried via satellite terminals, according to some embodiments.
FIG. 2A illustrates a satellite terminal, a satellite, network functions and a destination node, according to an example embodiment.
FIG. 2B illustrates protocols stacks for the satellite terminal and the other entities of FIG. 2A, according to an example embodiment.
FIG. 3 illustrates an example of the satellite terminal of FIG. 2B handing over from a first sequence of network functions including AGF 1 to a second sequence of network functions including AGF 2, according to an example embodiment.
FIG. 4A illustrates the user plane protocol stacks for AGF 1 and AGF 2 of FIG. 3, according to an example embodiment.
FIG. 4B illustrates further details of the control protocol stacks for AGF 1 and AGF 2 of FIG. 4A, according to an example embodiment.
FIG. 5 illustrates example handover scenarios which are addressed by this application, according to some example embodiments.
FIGS. 6A and 6B illustrate a logic flow for performing the AGF handover illustrated in FIG. 4, according to an example embodiment.
FIG. 7 illustrates exemplary hardware for implementation of computing devices for implementing the systems and algorithms described by the figures, according to some embodiments.

### DETAILED DESCRIPTION

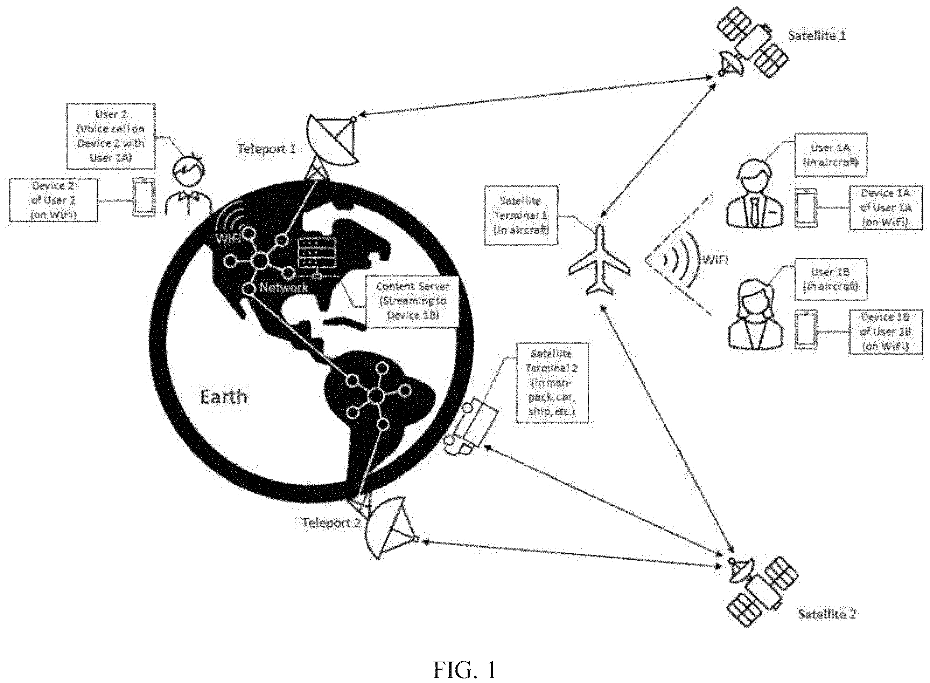

FIG. 1 illustrates the earth with various ongoing communication events.

A satellite terminal may be in an aircraft (satellite terminal 1), may be of a form factor to be in a man-pack (apparatus carried in a back-pack like arrangement) or may be in a car, truck, train or ship (satellite terminal 2). The satellite terminal may support communication by other devices such as consumer device 1A used by user 1A and consumer device 1B used by user 1B. User 1A is illustrated as having a real time voice conversation with user 2 (with device 2). The consumer devices may be cell phones, laptop computers or tablet computers, for example (similarly device 2). The consumer devices may communicate with the satellite terminal using, for example, Wi-Fi (IEEE 802.11). The consumer devices may be configured with various clients (apps) for providing services such as streaming or real time voice communications. Examples of apps are Zoom^{™} (trademark of Zoom Video Communications, Inc.), FaceTime^{™} (trademark of Apple, Inc.), and Skype^{™} (trademark of Microsoft).

The satellite terminal may be a legacy terminal designed to operate on a priority system such as Intelsat^{™} (trademark of INTERNATIONAL TELECOMMUNICATION SATELLITE ORGANIZATION) or OneWeb^{™} (trademark of WorldView Satellite, Ltd.). Example teleport 1 and example teleport 2 are shown in FIG. 1. That is, the legacy terminal may not include software and hardware for communication with a 5G core network.

Teleport 1 and Teleport 2 are provided with the AGF network function as described in the Network Migration Application.

When the satellite terminal 1 crosses a boundary from a beam of satellite 1 to a beam of satellite 2, an outage may occur which is observable by the user such as user 1A or user 1B. The outage may last from about three seconds to several minutes. Existing system observe the outage and then establish a new PDU session for the satellite terminal. The protocol for recognizing the outage and establishing a new PDU session is called Border Gateway Protocol (BGP). Border Gateway Protocol is a standardized exterior gateway protocol designed to exchange routing and reachability information among autonomous systems on the Internet.

The outage due to motion of the satellite terminal is a problem for the user. Some applications will close based on the outage, for example, FaceTime^{™}. Some applications will freeze an image while they wait for IP connectivity to be regained, for example, Zoom^{™}. For a real time conversation, such as via Skype^{™}, the bits representing the user speech are not delivered and become stale. That is, delivering speech delayed by more than about 250 ms is disturbing to a listener.

An outage caused by motion of the satellite terminal is a technical problem, because the flow of information bits to and from the satellite terminal has stopped for a certain amount of time, and the user device cannot perform as the user wishes it to perform (no voice, no streaming, user payload bits are lost).

In the example of FIG. 1, the satellite terminal includes a DHCP client. Each teleport includes an AGF. Embodiments provide an interface called Xi between an AGF 1 in teleport 1 and an AGF 2 in teleport 2. Using the Xi interface and a sequence of messages, Internet connectivity is improved for the satellite terminal.

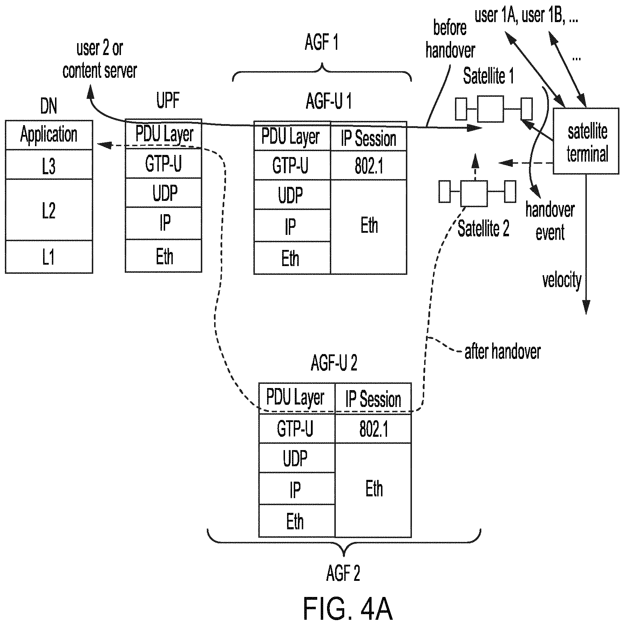

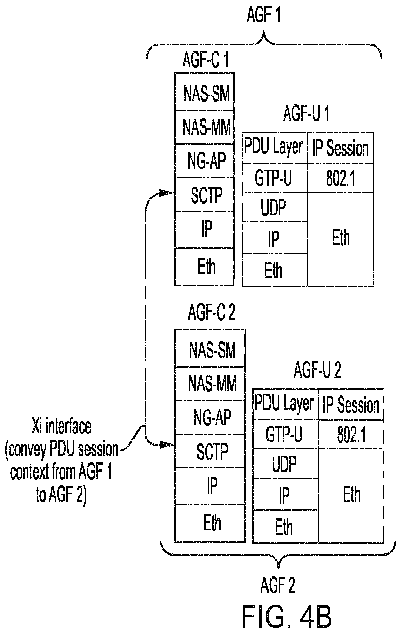

The Xi interface is an application of the LTE X2 interface between base stations to the network described in this application. The X2 interface is described in 3GPP TS 136.420, 136.421, 136.422, 136.423 and 136.424. The X2 interface provides for forwarding of PDUs between base stations. The X2 interface is applied in this application as the Xi interface. See FIGS. 4A and 4B.

A duration of interruption of PDU flows using embodiments is below 1-2 seconds. For streaming applications, a brief pause of 1-2 seconds in packet flow will not be observed as any pause at all by a user because content is buffered in a replay buffer. For real time voice, a user will notice a 1-2 second pause, but the slow response of BGP is avoided because the satellite terminal proactively begins the handover procedure when reaching a beam edge. In many instances, embodiments provide a make before break changeover to the target AGF. In contrast, BGP does not begin to act until a topology change of the network, for example loss of Internet connection due to motion of the satellite terminal moving out of a beam of the first satellite, has occurred. That is, BGP is always associated with a break before make switch to a next network providing Internet to the satellite terminal.

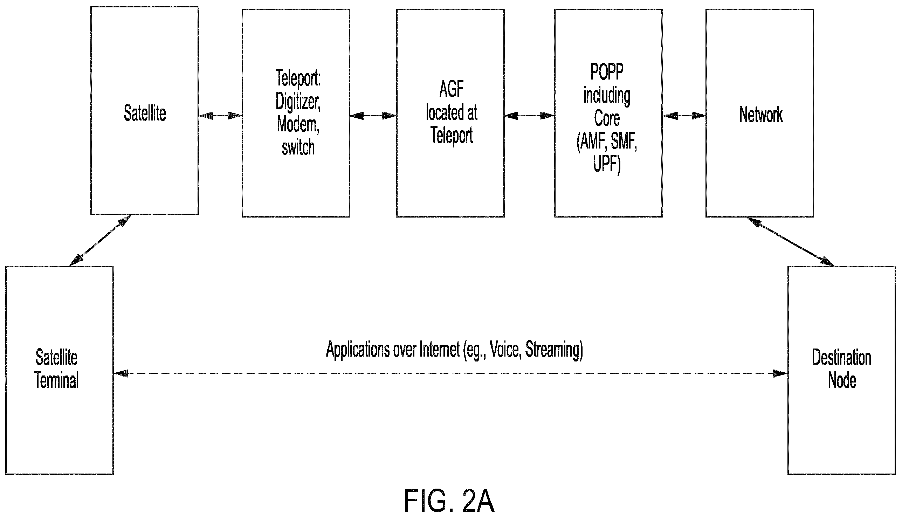

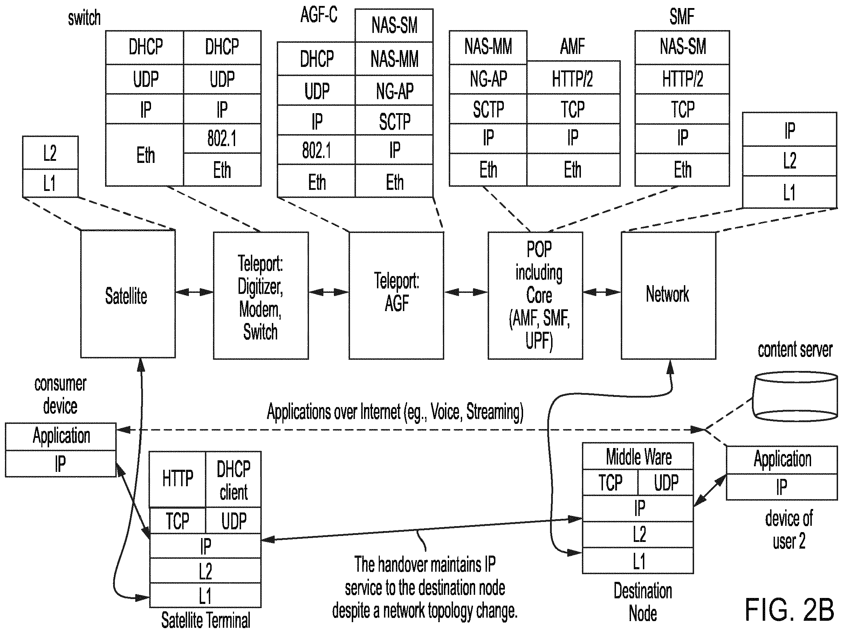

FIG. 2A illustrates a sequence of network functions connecting a satellite terminal to a destination node (DN). A destination node is a node reachable by the Internet which is directly in communication with a communication end point such as the content server in FIG. 1 or device 2 in FIG. 1. FIG. 2A schematically indicates that a user plane is supporting applications over the Internet. The applications may be voice and/or streaming. At layer 4, the voice application may be carried over UDP and the streaming application over TCP. Details of protocols stacks are provided in FIG. 2B.

Continuing the discussion with respect to FIG. 2A, the user plane traffic supported by the satellite terminal reaches the destination node via a satellite, a teleport, an AGF, a core network (for example 5G core network), and a network (for example, ISP). The teleport includes a digitizer, a modem, a switch and may include the AGF. Further description of the teleport can be found in the Network Migration Application. The functional requirements of the AGF, as background (no handover is possible), are provided by document TR-456 "AGF Functional Requirements," published by The Broadband Forum, August 2020 ("AGF Requirements"). Embodiments of the present application provide modifications to the AGF to support handover of a moving satellite terminal.

The core includes an AMF, SMF and UPF. Further description related to interface with the 5G core can be found in 3GPP TS 23.316, "Wireless and wireline convergence access support for the 5G System," v 16.6.0 (2020-12).

The 5G AMF is an evolution of 4G MME, including control plane and user plane separation, and with moving the sessions management functions to the SMF (sessions management function).

The 5G User Plane Function (UPF) connects the actual user coming over a radio area network (RAN) to the Internet. In present embodiments, the user data is not flowing from a RAN (5G radio access network), rather it is flowing from a legacy satellite terminal through the AGF to the core.

FIG. 2B provides further details of the network functions shown in FIG. 2A.

The result of control and data flows through the protocol stacks of FIG. 2B is that the IP layer at the satellite terminal remains connected, or with a brief pause, to the IP layer at the destination node. Over this IP connection flow applications such as voice and streaming. The peripheral connections between the satellite terminal and consumer devices are not shown in FIG. 2B. The IP protocol may be carried over Wi-Fi to the consumer devices. Also the peripheral connection from the DN to the device of user 2 is not shown in FIG. 2B. This may be over a cable protocol, fiber, or twisted pair such as DSL to a switch or router at a home or office and finally Wi-Fi or Ethernet to the device of user 2.

The satellite terminal supports protocols at layers 1, 2, 3, 4 and also HTTP and DHCP. FIG. 2B shows an application at the consumer device, in a non-limiting example the consumer device 1A and 1B as shown in FIG. 1. The implementation of protocols and flows from the satellite terminal to the consumer device is well known. FIG. 2B indicates some details of the protocol stack at the consumer device, but not all the layers. For example, the physical layer may be Wi-Fi, not shown in FIG. 2B.

Similarly, adjacent to the destination node, the application layer may be a server function of streaming or voice with the client function of streaming or voice at the device used by user 2. The implementation of protocols and flows from the destination node (for example, an application server) to a client device such as that of user 2 is well known.

Continuing with the discussion of FIG. 2B, the satellite implements a physical layer (L1) and a data link layer (L2). In some embodiments, the satellite implements an L3 layer (routing). The teleport includes an antenna, a digitizer, a modem and a switch, among other functions. The switch includes two protocol stacks. The left most protocol stack of the switch are conventional layers at a teleport. The rightmost protocol stack of the switch communicates with the AGF. For the AGF, protocol stacks for the control plane are shown, thus the label AGF-C. Protocol stacks for the user plane for the AGF are shown in FIG. 4. The leftmost stack of the AGF-C communicates with the switch. The rightmost stack of the AGF-C communicates with the AMF in the core. Protocol layers unique to 5G are present in the rightmost stack of the AGF-C (SCTP and some NAS protocols). The protocol layers of the AMF and SMF are conventional. The network includes L1, L2, and IP (routing) protocol layers and is conventional as offered by an ISP. The destination node provides a TCP endpoint for streaming above the IP layer. The destination node physically connects to the device of user 2 or to a content server. In some embodiments the destination node is the content server.

FIG. 2B illustrates with a dashed double headed arrow the end-to-end application connection from the consumer device through the satellite terminal to the content server or the device of user 2. This support of the application is over IP, which is indicated with a solid double-headed arrow between the satellite terminal and the destination node.

In FIG. 2B, the IP address of the satellite terminal has been obtained using the AGF by the DHCP client of the satellite terminal. The SMF allocates an IP address to the satellite terminal authorized by the AMF, and the SMF interacts with the UPF to maintain session state for the satellite terminal. The process for obtaining the IP address is explained in the Network Migration Application.

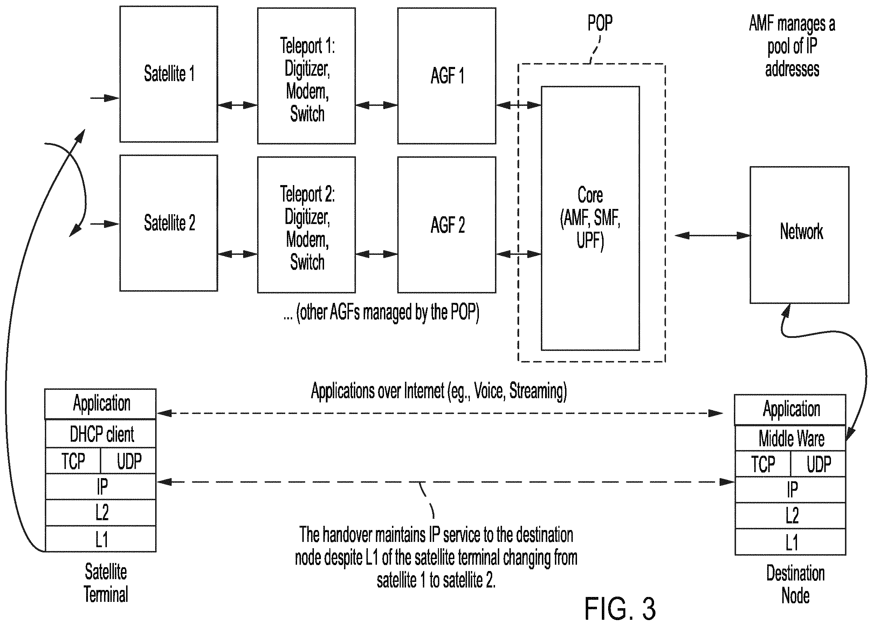

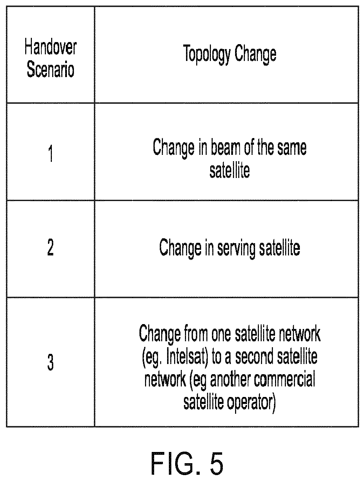

FIG. 3 schematically illustrates handover of embodiments when the satellite terminal has moved from a beam of a first satellite to a beam of a second satellite. Other network topologies are also supported by embodiments. See FIG. 5 for a list of example network topology changes.

In FIG. 3, a first path of satellite 1, teleport 1, AGF 1, point of presence (POP) including core, and network leading to the destination node is shown. Also a second path of satellite 2, teleport 2, AGF 2, the POP including the core, and the network leading to the destination node is shown. The peripheral devices at each end are not shown in FIG. 3. The application layer (supporting, for example, Zoom^{™}, FaceTime^{™}, Skype^{™}, or streaming) is shown symbolically at the satellite terminal and the destination node.

The need for the handover in FIG. 3, in some embodiments, is determined by the satellite terminal monitoring ephemeris data. The ephemeris data is compared by the satellite terminal with a geographic map which includes satellite beam boundaries. When the satellite terminal recognizes that its motion is physically bringing the satellite terminal into a beam of satellite 2, the satellite terminal begins the handover process. When the beam of satellite 1 and the beam of satellite 2 have overlap, the handover process occurs within a time duration similar to the time required for a terrestrial handover between user equipments (UEs) in a terrestrial network such as 4G LTE or 5G. There is a possible additional delay factor due to the propagation time from the geostationary orbit of a telecom satellite to a teleport (about 700 ms delay).

A pool of IP addresses is maintained at the SMF. When the handover does not require a change in SMF, then a new IP address at the satellite terminal is not needed, because the AGF 2 can support the already-assigned IP address that was supported by AGF 1.

When the handover is to a different core with a different SMF ("SMF 2"), embodiments then, using the DHCP client in the satellite terminal and the AGF 2, obtain a new IP address from the SMF 2. The old IP address is released back to the pool at the first SMF. Internet service is thus maintained for the applications running from end to end.

FIG. 4A illustrates events during the handover process. FIG. 4A is primarily an illustration of user plane flows. In addition, FIG. 4A indicates the control portion of AGF 1 (AGF-C 1) and the control portion of AGF 2 (AGF-C 2).

The heavy double-headed arrow in FIG. 4A shows the user plane flow before the handover. The heavy dashed double-headed arrow shows the user plane flow after the handover. The user plane flows pass through AGF-U for each AGF, and do not pass through AGF-C of either AGF.

FIG. 4A illustrates that the moving entity being handed over is a moving network. In FIG. 4A, the satellite terminal acts as a gateway between the satellite layers L1 and L2 and, for example, IEEE 802.11 L1 and L2 for each of the devices of user 1A and user 1B. There may be additional user devices supported by the satellite terminal, as indicated by the ellipses in the upper right of FIG. 4A.

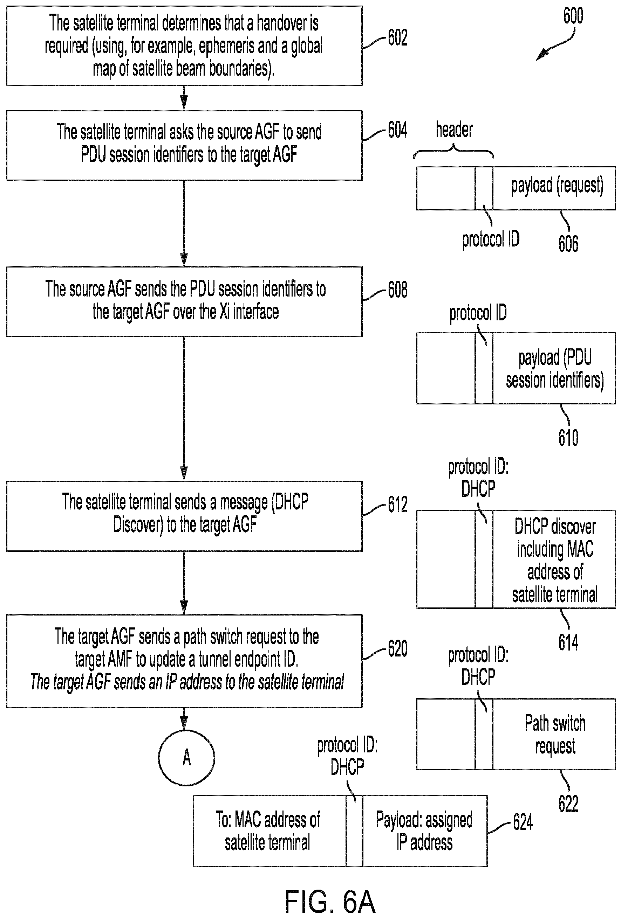

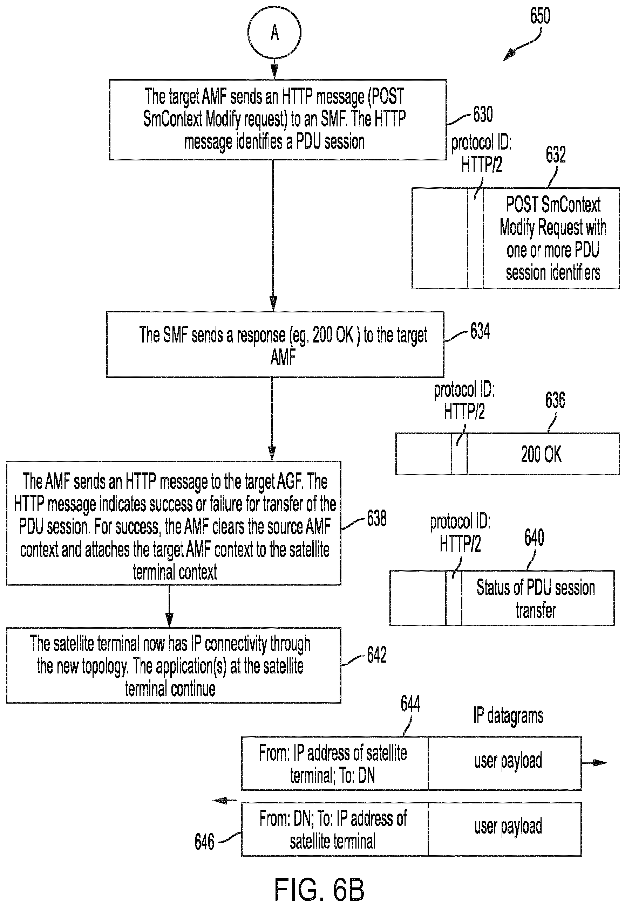

FIG. 4B illustrates more details of the control plane portions of the AGFs. FIG. 4B illustrates that AGF-C 1 communicates using the SCTP protocol over an Xi interface with the control portion of AGF-C 2. The Xi interface is similar to the Xn interface of 5G. Messages used to bring about the handover will be discussed below in relation to FIGS. 6A and 6B.

FIG. 5 illustrates four example handover scenarios. Scenario 2 is a topology change resulting from a change in serving satellite. FIGS. 2A, 2B, 3, 4, 6A and 6B illustrates the handover process for handover scenario 2.

Handover scenario 1 is handover between beams of the same satellite.

Handover scenario 3 is a change between satellite network providers. Scenario 3 is an example of roaming. By providing support for an AGF in a first network to maintain a PDU session by transferring context to an AGF in a second network, roaming is supported.

Because the PDU session is maintained, re-registration with the core is not required and re-authentication with the core is not required. This applies to all handover scenarios.

Overall, when the satellite terminal moves and requires a new IP address, a DHCP sequence is used to obtain the new IP address. The broadcast DHCP Discover (see message 614 in FIG. 6A) comes into the target AGF. The DHCP discover results in the DHCP offer from SMF. The target AGF acts as a DHCP relay to the target SMF and the offer comes back through the target AGF ultimately to the satellite terminal.

The offer comes back and that gives the satellite terminal an IP address. There is a registration between the IP address assigned by the SMF and Mac address of the satellite terminal (which is permanent). A Subscription Permanent Identifier (SUPI) is a string of 15 decimal digits. The first three digits represent the Mobile Country Code (MCC), the next two or three represent the Mobile Network Code (MNC) identifying the network operator. A MAC address may be used rather than a SUPI for performing the handover.

At this point, there is layer 3 connectivity (IP layer) resulting from the DHCP offer.

The satellite terminal also learns its gateway IP address (IP address of the switch in the teleport).

Then, the satellite terminal knows how to reach the rest of the world via the gateway, so then the satellite terminal it can send TCP IP datagrams and can be reached by TCP IP datagrams.

Then the satellite terminal can send TCP IP datagrams and when it can send TCP IP datagrams, it can send layer 4 messages such as Path Switch request, and path switch like request acknowledgement.

In contrast, using BGP routing is a reactive measure to some sort of a topology change. It always requires a topology change to force network convergence.

In the embodiments of the present application, a proactive approach is provided to signal and communicate proactively that a handover is needed. Instead of having seconds to minutes of downtime from a slow reactive approach, depending on the scenario, embodiments provide the handover often in less than one second and generally below 1-2 seconds.

In the logic flow discussion below, a source AGF corresponds to AGF 1 of the figures, and a target AGF corresponds to AGF 2 of the figures. Similar nomenclature applies to other network entities labelled as 1 ("source") and 2 ("target").

FIG. 6A illustrates a logic flow 600 which continues to logic flow 650 of FIG. 6B.

At operation 602, the satellite terminal determines that a handover is required. This may be done using ephemeris data and a global map of satellite beam boundaries.

At operation 604, the satellite terminal sends a message 606 asking the source AGF, AGF 1, to send PDU session identifiers to the target AGF, AGF 2. The satellite terminal stack and AGF stack in FIG. 2 to be updated if needed with an additional layer to send/receive this message.]

At operation 608, the source AGF sends the PDU session identifiers to the target AGF over the Xi interface, see message 610.

Additional information may be sent over the Xi interface to complete the session context at the target AGF. The session context for a PDU session includes one or more of the items shown in Table 1. Also see AGF Requirements.

**Table 1. PDU Session Context at AGF**

| |
|---|
| The address of the switch at the Teleport (see FIG. 2B, upper left) |
| The PDU session ID assigned by the AMF. |
| The 5W# session ID assigned by the AGF. |
| The IEEE 802 MAC address of the satellite terminal. |
| VLAN tag control information (TCI) as specified in IEEE 802.1Q. |
| The TEID and UPF's IP address of the N3 interface instance associated with the PDU session. |
| Mapping of permissible PDU session QFI values to Ethernet Priority Code Point (PCP) values and/or DSCP values. |
| Allowable protocols for the PDU session, for example, IPV4 type, IPv6 type, or Ethernet type. |

AT operation 612, the satellite terminal sends a DHCP Discover message to the target AGF. See message 614.

At operation 620, the target AGF sends a path switch request to the target AMF to update a tunnel endpoint ID (see message 622). The target AGF sends an IP address to the satellite terminal, see message 624.

Referring to FIG. 6B, at operation 630, the target AMF sends an HTTP message, for example, a POST SmContext Modify request, to an SMF. This may be the source SMF. See message 632.

At operation 634, the SMF sends a response such as 200 OK to the target AMF. See message 636.

At operation 638, the AMF sends an HTTP message to the target AGF. The HTTP message indicates success or failure for transfer of each PDU session identified in message 630. See message 640. For those sessions successfully transferred, the AMF clears the source AMF context and attaches the target AMF context to the satellite terminal context.

The satellite terminal now has maintained IP connectivity through the new topology. The applications running over IP in the satellite terminal continue to function as observed at the peripheral devices of FIGS. 1, 2A, 2B. See example IP datagrams 644 and 646.

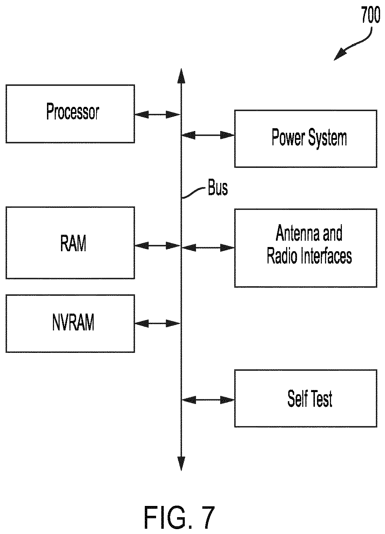

Hardware for performing embodiments provided herein is now described with respect to FIG. 7. FIG. 8 illustrates an exemplary apparatus 700 for implementation of the embodiments disclosed herein. The apparatus 700 may be a server, a computer, a laptop computer, a handheld device, or a tablet computer device, for example. Apparatus 700 may include one or more hardware processors, for example CPU and/or GPU. The one or more hardware processors may include an ASIC (application specific integrated circuit), CPU (for example CISC or RISC device), and/or custom hardware. Apparatus 7001 also may include a user interface (for example a display screen and/or keyboard and/or pointing device such as a mouse) (not shown). Apparatus 700 may include one or more volatile memories and one or more non-volatile memories. The one or more non-volatile memories may include a non-transitory computer readable medium storing instructions for execution by the one or more hardware processors to cause apparatus 700 to perform any of the methods of embodiments disclosed herein.

## Claims

1. A method of maintaining Internet connectivity between a satellite terminal and a destination node, the method comprising:
determining, at the satellite terminal, that a handover is required because radio coverage will become unavailable from a first satellite;
sending, by the satellite terminal, a first message asking that a source access gateway function (AGF) send a packet data unit (PDU) session identifier to a target AGF;
receiving, by the target AGF from the source AGF, the PDU session identifier; and
exchanging, by the satellite terminal via a target satellite, a plurality of IP datagrams with the destination node using an Internet Protocol address, wherein a flow of the plurality of IP datagrams is supported by the target AGF using the PDU session identifier.

2. The method of claim 1, further comprising:
sending, by the satellite terminal, a DHCP Discover message to a target teleport; and
receiving, at the satellite terminal, a second IP address from a target session management function (SMF).

3. The method of claim 2, wherein the exchanging is via the second IP address.

4. The method of claim 1, wherein the satellite terminal uses ephemeris data and a global map of satellite beam boundaries in the determining.

5. The method of claim 1, wherein the target AGF receives the PDU session identifier over an Xi interface.

6. The method of claim 2, wherein the DHCP Discover message comprises the MAC address of the satellite terminal as the access identifier and does not include a SUPI.

7. The method of claim 6, further comprising sending, by an access and mobility function (AMF) an HTTP message to the SMF requesting the second IP address, wherein the HTTP message is a POST SmContext Modify request, wherein the second IP address is a new or replacement IP address.

8. The method of claim 7, further comprising sending, by the AMF to the target AGF, an HTTP message indicating success or failure for transfer of each PDU session identified in the POST SmContext Modify.

9. The method of claim 8, further comprising, by the AMF, clearing a source AMF context and attaching a target AMF context to a satellite context.

10. A system for maintaining Internet connectivity between a satellite terminal and a destination node, the system comprising:
the satellite terminal;
a source access gateway function (AGF);
a target AGF;
an access and mobility function (AMF); and
a destination node (DN),
wherein the satellite terminal is configured to:
determine that a handover is required because radio coverage will become unavailable from a source satellite;
send a first message asking that the source AGF send packet data unit (PDU) session identifiers to the target AGF,
wherein the target AGF is configured to receive, from the source AGF, the PDU session identifier, and
wherein the satellite terminal is further configured to exchange, via a target satellite, a plurality of IP datagrams with the destination node using an IP address, wherein a flow of the IP datagrams is supported by the target AGF using the PDU session identifier.

11. The system of claim 10, wherein the satellite terminal is configured to use ephemeris data and a global map of satellite beam boundaries to determine when coverage will become unavailable and new beams become available.

12. The system of claim 10, wherein the target AGF is further configured to receive the PDU session identifier over an Xi interface.

13. The system of claim 10, wherein the satellite terminal is further configured to:
send a DHCP Discover message to a target teleport; and
receive a second IP address from a target Session Management Function (SMF).

14. The system of claim 13, wherein the DHCP Discover message comprises a MAC address of the satellite terminal, and the MAC address of the satellite terminal is used as the access identifier for authentication.

15. The system of claim 14, further comprising sending, by the target AMF an HTTP message to the SMF requesting the second IP address, wherein the HTTP message is a POST SmContext Modify request.

16. The system of claim 15, wherein the target AGF is configured to receive from the AMF, an HTTP message indicating success or failure for transfer of a PDU session identified in the POST SmContext Modify.

17. The system of claim 10, wherein the satellite terminal is in a ship, an aircraft, a truck, a train or a man-pack.
